# EUROPEAN PATENT APPLICATION

(11) **EP 1 168 219 A2**
(43) Date of publication of application: **02.01.2002**
(21) Application number: 01305316.0
(22) Date of filing: 19.06.2001
(51) Int. Cl.: G06F 17/60

(54) **Client information collecting method, client information providing method, point assigning method, merchandise information providing method, and merchandise information collection apparatus using network**

(30) Priority: 20.06.2000 JP 2000184633; 14.02.2001 JP 2001037567
(71) Applicant: Disparce, Inc., Nagoya-shi, Aichi-ken 460-0003 (JP)
(72) Inventor: Noda, Hajime, Nagoya-shi, Aichi-ken 460-0003 (JP); Hirano, Kazuhiro, Nagoya-shi, Aichi-ken 460-0003 (JP)
(74) Representative: Lucas, Brian Ronald

(57) **Abstract**

Client information is collected by a client entering his or her address, name, etc. when the client buys merchandise and makes a payment. The client information is written to a CD-RW which is provided for the client. When the client uses the CD-RW to access the home page of the selling agent of the merchandise, the client information recorded on the CD-RW is transmitted to the server of a client database generation company. The server generates a client information database classified by merchandise categories.

## Description

### Background of the Invention

### Field of the Invention

The present invention relates to a client information collecting method and a client information providing method, and more specifically to a client information collecting method, a merchandise information collection apparatus, and a point service providing apparatus using a network.

### Description of the Related Art

In supermarkets and convenience stores, a bar code applied to merchandise is read by a register with a laser scanner, the sales amount is computed and printed on the receipt, and the volume of sales of each merchandise item is computed for each store or for a plurality of stores. By aggregating the volume of sales for each merchandise item, the volume of sales of a specified merchandise item can be grasped, and the volume of order for merchandise can be correctly managed, thereby preventing excess inventory from increasing or a sales opportunity from being lost.

When a consumer selects merchandise in a store, the price tag carries the minimal information relating to the merchandise, for example, the price, the name of the merchandise, the product number, the selling agent, etc.

Direct mail is sent to many people to promote the sales of merchandise. However, since all people receiving the direct mail is not prospects to buy the merchandise, it is not expected that the direct mail has a large sales promotion effect.

Furthermore, manufacturers have conventionally collected the information about the consumers who have bought their merchandise through the user entry, etc., but cannot collect information about the consumers who buy merchandise on which the user entry is not performed.

Additionally, since there is a strong probability that a client who has bought a merchandise will also buy merchandise of another type related to the merchandise, it is very effective in sales strategy if the information about such client can be collected.

Furthermore, it is very convenient for a consumer to be able to immediately obtain at a store the information about the merchandise to be bought and related merchandise.

### Summary of the Invention

The present invention aims at collecting client information and the information about a client and the merchandise bought by the client. The present invention also aims at collecting or providing the client information classified by categories or selling agents. The present invention further aims at collecting client information using a tag code. The present invention further aims at providing a point service which allows a discount for merchandise when a site of a network is accessed using a tag code. The present invention further aims at allowing a consumer to easily obtain information using the tag code. The present invention furthermore aims at providing a manufacturer, etc. with marketing information generated according to client information.

An aspect of the present invention is a client information collecting method in which a writable and portable storage medium is attached to merchandise, and the client information about the address of a client and the name of the client, and the information about the merchandise or a selling agent are stored in the portable storage medium and provided for the client so that the client information and the information about the merchandise or selling agent stored in the portable storage medium can be collected when the client accesses the site in the network using the portable storage medium.

According to the present invention, the address and the name of a client, and the merchandise bought by the client or the information about the selling agent are stored in a writable and portable storage medium. When the client accesses the site of the network using a program, etc. stored in the portable storage medium, the client information about the client who is accessing the site, and the information about the merchandise or the selling agent can be collected. Thus, since the client information can be classified by merchandise bought by the client or by selling agents, the information about the client, the information about a prospective client for the merchandise can be obtained, and can be effectively utilized for marketing.

Another aspect of the present invention is a client information collecting method in which the client information containing the address and the name of a client is stored in a writable and portable storage medium and provided for the client so that the client information or the information about a client and the merchandise the client bought stored in the portable storage medium can be collected when the client accesses the site of the network using the portable storage medium.

For example, if a client who bought merchandise, or a client interested in specific merchandise is provided with a portable storage medium, and the client accesses a specific site of the network using the portable storage medium, then the client information or the information about the client and the merchandise stored in the portable storage medium are transmitted, and the accessed site or the server of the site related to the site, etc. can collect the client information (or the information about the client and the merchandise). Therefore, since prospective clients for specific merchandise can be roughly selected according to the information, high efficiency sales marketing can be performed.

Furthermore, according to the above mentioned invention, the collected client information can be classified based on the information about merchandise or a selling agent, and a client information database can be generated by merchandise categories or selling agents.

With the above mentioned configuration, the client information database can be generated by merchandise categories or selling agents. Therefore, target clients are roughly selected based on the category of the merchandise to be sold, or the business type of a selling agent, thereby performing precision marketing.

In the above mentioned invention, the marketing map information can be generated by linking the client information with the map data stored in advance based on the collected addresses of clients.

With the configuration, the address of a client is displayed on the map, and the number of prospective clients for specific merchandise, a restaurant, a convenience store, etc. can be grasped. Thus, a service or merchandise appropriate for a specific area and the demand of clients can be provided.

In the client information providing method according to another aspect of the present invention, the client information containing the address and the name of a client and the information about merchandise are stored in a writable and potable storage medium attached to the merchandise and provided for a client, the client information and the information about the merchandise bought by the client stored in the portable storage medium are collected when the client accesses a site in the network using the portable storage medium, a client information database containing the collected client information classified by merchandise categories or by selling agents is generated, and the generated client information database is provided.

According to the invention, when a client accesses a site in the network using a portable storage medium, the client information and the information about the merchandise bought by the client are collected, a client information database obtained by classifying the client information by merchandise categories or selling agents is generated and provided for the third party. Thus, from the client information database, the information about the most prospective client for the merchandise to be sold by a store, etc. can be obtained.

In another aspect of the present invention, a tag code uniquely assigned to merchandise is recorded on a tag attached to merchandise, the body of merchandise, or the case storing the merchandise. When a user who has bought the merchandise accesses the site of the network from a portable terminal device, a tag code, input from the portable terminal device, of the merchandise bought by the user, and the client information containing at least the name and the address of the user are collected.

Since a tag code uniquely specifying merchandise and client information can be collected according to the present invention, such information can be obtained as 'What type of client buys the merchandise?', 'Which merchandise from which manufacturer is bought by the customer?', etc.

According to another aspect of the present invention, a tag code uniquely assigned to merchandise is recorded on a tag attached to merchandise, the body of merchandise, or the case storing the merchandise. When a user who has bought the merchandise accesses the site of the network from a portable terminal device, a point set in a tag code, input from the portable terminal device, of the merchandise bought by the user is assigned to the user.

According to the present invention, the user who has bought the merchandise, or the user who saw the advertisement of the merchandise accesses the site of the network, and inputs the tag code to obtain the point. Therefore, the user can save the point and buy the merchandise at a discount.

According to the above mentioned invention, the discount rate or the allowed points can be set higher for a client who has bought the merchandise of the same manufacturer more frequently than others.

With the configuration, when a client buys merchandise of a manufacturer, a discount can be allowed for the client if he or she has frequently bought any merchandise of the manufacturer. As a result, the client is promoted to repeatedly buy the merchandise of the manufacturer.

According to the above mentioned invention, the points issued by a plurality of manufacturers can be commonly managed such that merchandise can be bought at a discount by downloading the point obtained by a client from the site to the portable terminal device or the terminal device of a store when the merchandise is bought.

With the configuration, a client can accumulate and use the point obtained by buying merchandise of a plurality of manufacturers. Therefore, the client is promoted to selectively buy tag code assigned merchandise.

According to another aspect of the present invention, when a tag code uniquely set for an advertisement medium is recorded or displayed on the advertisement medium, and a user accesses the site in the network using the tag code, the point set in the tag code is assigned to the user.

According to the present invention, an advertiser can expect a number of users to see the advertisement by assigning the point to the user who accesses the site using the tag code, thereby increasing the effect of the advertisement.

According to a further aspect of the present invention, when a tag code uniquely assigned to merchandise is recorded on the tag attached to merchandise, the merchandise itself, or the case storing the merchandise, and a user who buys the merchandise accesses the site of the network from the portable terminal device using the tag code, the client information containing the address and the name of the user input through the portable terminal device is collected with the tag code, the marketing information about the merchandise is generated according to the client information, and the collected client information or the marketing information are provided for the manufacturer or the store.

According to the invention, the client information about the client who has actually bought plural pieces of merchandise of a plurality of manufacturers can be obtained using the tag code. For example, the information about clients of each merchandise item can be obtained. Therefore, according to the information, more effective information in marketing strategy can be provided.

According to a further aspect of the present invention, when a tag code uniquely assigned to an advertisement medium or the information to be provided is issued, the tag code is recorded on the advertisement medium, and a consumer accesses the site of the network using the tag code, the site providing the information about the merchandise advertised based on the tag code is automatically accessed.

According to the invention, when the site is accessed using the tag code recorded on the advertisement medium, the site providing the information the user requests to obtain can be directly accessed. Therefore, the information can be efficiently obtained without performing retrieval as in the conventional technology.

According to the above mentioned invention, when a consumer accesses the site and inputs the tag code recorded on the advertisement medium, the number of times of access using the tag can be recorded to measure the effect of the advertisement of the advertisement medium.

With the configuration, the number of consumers who take interest in the advertisement medium can be roughly grasped, thereby correctly evaluating the effect of the advertisement.

In the above mentioned invention, the tag code recorded on an advertisement medium can be varied for each area so that the number of times of access can be counted in area units, or so that client information can be collected.

With the configuration, the merchandise in the advertisement medium, the advertisement, or the interest of the users in each area can be checked, and the marketing information about the consumers in each area can be collected.

### Brief Description of the Drawings

FIG. 1 shows the flow from buying merchandise to collecting client information;
FIG. 2 shows the client information collecting method;
FIG. 3 shows the process of entering client information;
FIG. 4 shows an example of using a media drive;
FIG. 5 shows the processes of recording and transmitting information using the media drive;
FIG. 6 is a flowchart of the process of collecting client information;
FIG. 7 shows the procedure of a user obtaining a point using a tag code according to the second embodiment;
FIG. 8 shows the storage medium of a tag code;
FIG. 9 is a flowchart of the procedure of obtaining a tag code;
FIG. 10 is a flowchart of a discount-by-point process;
FIG. 11 is a flowchart of a user entering process
FIG. 12 shows the process of obtaining information using a published tag code, and acquiring a point;
FIG. 13 shows the process of generating marketing information;
FIG. 14 shows the method of processing marketing information; and
FIG. 15 shows the process of partly sharing a database.

### Description of Preferred Embodiments

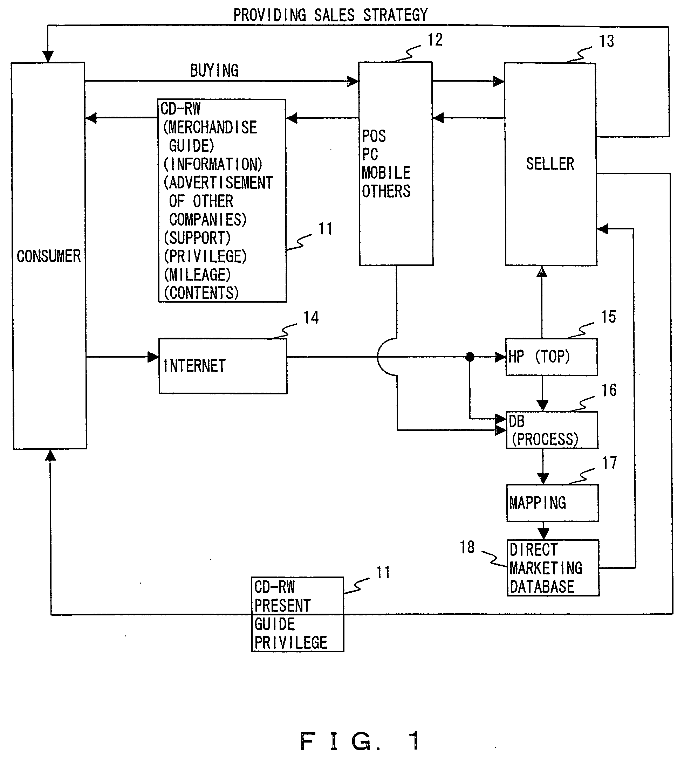

The embodiments of the present invention are described below by referring to the attached drawings. FIG. 1 shows the flow from buying merchandise to collecting client information in the client information collecting method according to the present invention.

A writable CD-RW (portable storage medium) 11 is attached as a price tag to merchandise. The CD-RW 11 stores the explanation of the merchandise, the information about other merchandise of the selling agent or the manufacturer, the advertisement of merchandise which the clients of the merchandise are expected to buy, a communications program for access to the home page of the selling agent or the manufacturer of the merchandise, the access right to access Internet free of charge for a predetermined time, a program, music data, and other data to be used by a consumer free of charge, a service point acquired for a discount service when a client buys merchandise, technical support information about merchandise, the address of a service center, the address for information, etc. In addition, the necessary information for sales management of the merchandise is printed as a bar code on the reverse side of the CD-RW 11, or the film sheet used to protect the CD-RW 11.

When a consumer (client or user) makes a payment for merchandise at the counter of the store, he or she is asked to enter information such as the address, name, age, family configuration, hobby, merchandise to be bought, etc. on the form while being informed of the merit of accessing Internet using the CD-RW 11. The cashier inputs the client information entered on the form in the input device of a POS terminal 12, a personal computer (PC), or a mobile terminal device, etc. The client information input by the cashier and the merchandise information read from the bar code printed on the CD-RW 11 are written to the CD-RW 11 attached to the merchandise by the drive device of the CD-RW 11 of the POS terminal. Furthermore, the client information and the merchandise information input through the POS terminal, etc. is stored in the client information database of a seller (store, or selling agent) 13.

When the CD-RW 11 provided for a client free of charge is inserted into the CD-ROM drive, etc. of the personal computer of the client, and the CD-RW 11 is accessed, the icons of the program, data, merchandise, seller, etc. stored in the CD-RW 11 are displayed. For example, when the mouse button is clicked on the icon indicating the seller 13 of a specific merchandise, the communications program is activated, and a home page 15 of a server (site) 13 of the seller is accessed through Internet 14. When the home page of the server 13 of the seller is accessed, the client information and the information about the merchandise bought by the client are transmitted to a server 16 of the company generating the client information database linked to the server 13 of the seller. The acknowledge button, etc. for approval of the transmission of the client information can be displayed on the screen, and the client information can be transmitted when the acknowledge button is operated.

When the client accesses a specific server using the CD-RW 11, for example, accesses the home page of the selling agent, the client information about the client who has accessed the home page can be transmitted to the server of the selling agent, and can be stored in the client information database of the server.

The server 16 has the functions of: classifying the client information by categories of merchandise and by sellers, and generating client information databases by classified merchandise categories and by selling agents; generating (mapping 17) marketing map information obtained by linking the address of the client to the map data stored in advance; and generating a mapped client information database (direct marketing database 18).

In addition, the CD-RW 11 can be, not attached to merchandise, provided free of charge for a consumer interested in the merchandise. Instead of providing the function of accessing Internet free of charge for a predetermined time, or providing free of charge the CD-RW 11 storing a charge-free program, etc., a consumer is requested to input information such as the address, name, age, hobby, merchandise to be bought, etc. on the form or through a mobile terminal, etc., and the client information is written to the CD-RW 11, and is provided for the consumer. When the consumer accesses the site of a specific seller (the seller who provides the CD-RW 11 or the seller of the advertisement, etc. on the CD-RW 11) in Internet using the CD-RW 11, the client information and the information about the merchandise in which the consumer takes interest are transmitted to the server 16 of the client information database generation company so that the client information database can be generated.

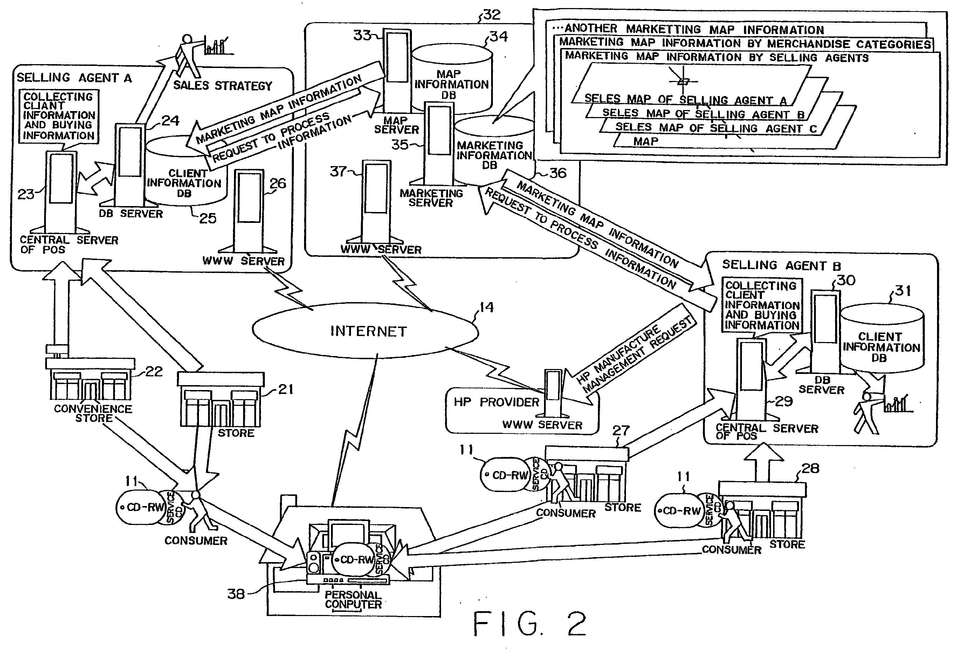

Then, the selling agents A and B sell the merchandise with the CD-RW 11 attached to the merchandise, collect the client information when a consumer accesses Internet using the CD-RW 11, and generate marketing map information by linking the collected client information to the map data. These processes are described below by referring to FIG. 2.

When a consumer buys merchandise, a store 21 and a convenience store 22 provide the consumer with the CD-RW 11 attached to the merchandise free of charge, explain the merit that the consumer can access Internet free of charge for a predetermined time, that the consumer can have a discount by saving a point, and that the consumer can obtain useful programs free of charge, etc., and ask the consumer to enter the client information such as the address, name, age, family configuration, etc. of the consumer so that the information can be stored in the CD-RW 11 through the personal computer. Simultaneously, the client information and the information about the bought merchandise are transmitted to a central server 23 of the selling agent A which manages the store 21 and the convenience store 22.

The selling agent A comprises: the central server 23 for collecting and managing the client information and the sales information transmitted from the store 21 and the convenience store 22; a database server 24 for generating a client information database 25 by classifying the client information collected by the central server 23 based on the merchandise bought by the consumer, the category of the merchandise, the age of the consumer, and a WWW server 26 for displaying the information to be provided for the consumer, the advertisement, etc. on the home page.

Similarly in stores 27 and 28 related to the selling agent B, the client information about the consumer and the information about the bought merchandise are recorded on the CD-RW 11 attached to the merchandise bought by the consumer, and provided for the consumer. The client information and the information about the sold merchandise are transmitted to a central server 29 of the selling agent B which manages the stores 27 and 28. A database server 30 classifies the client information collected by the central server 29 based on the merchandise bought by the consumer, the category of the merchandise, the age of the consumer, etc., and generates a client information database 31.

A client information database generating company 32 comprises a map server 33 for managing a map information database 34, a marketing server 35 for managing a marketing information database 36, and a WWW (world wide web) server 37 for managing a home page.

The WWW server 37 receives the client information and the information about the merchandise bought by the consumer transmitted from the communications program stored in the CD-RW 11 when the consumer accesses the home page of the selling agent using the CD-RW 11.

The map server 33 reads the map data corresponding to the address of the client from the map information database 34, and outputs it to the marketing server 35.

The marketing server 35 generates a client database by merchandise categories or by selling agents according to the client information and the information about the bought merchandise output from the WWW server 37. Furthermore, it links the client information to the map data read from the map information database 34 based on the address of the client, generates marketing map information for display of the addresses of a plurality of clients having the same attributes (the category of merchandise, the selling agent of the merchandise, the age of the client, etc.) on a sheet of map, and stores the information in the marketing information database 36. When a request to process the information is received from a selling agent, the client information classified by merchandise categories and by selling agents, and the marketing map information are transmitted to the selling agent who issued the request.

The marketing map information has the structure in which the clients having the same attributes in merchandise categories, selling agents, etc. are linked to the map data as shown in FIG. 2. Therefore, by specifying an area to be displayed, the addresses of the clients having the same attribute, for example, the clients who bought the merchandise in the same category are displayed, are displayed on a sheet of map. Furthermore, by specifying a specific point on the map, the detailed client information about the corresponding clients can be displayed.

The marketing map information has the data structure such that the clients having the same attributes can be displayed on a sheet of map by classifying the clients by attributes such as merchandise categories, by selling agents, etc. Furthermore, by obtaining the OR condition of plural pieces of marketing map information, the plural pieces of marketing map information can be overlapped, and the clients having different attributes can be displayed on a sheet of map. Otherwise, by obtaining the AND condition of the market map information, a plurality of attributes, that is, the clients who bought merchandise of both categories a and b can be displayed on a sheet of map.

Therefore, by using the marketing map information, a store, a selling agent, a manufacturer, etc. can obtain marketing information such as the type of merchandise bought by consumers in a specific area, the selling agent selected by a larger number of clients, etc. Therefore, according to the obtained marketing information, the merchandise and the services corresponding to a target area and clients can be provided.

For example, if a consumer inserts the CD-RW 11 into the CD drive, etc. of a personal computer 38 at home, and clicks the mouse button for the icon indicating the selling agent A (or the selling agent B) stored in the CD-RW 11 to access the home page of the selling agent, then the client information and the information indicating the bought merchandise stored in the CD-RW 11 are transmitted to the WWW server 37 of the client information database generating company 32. Then, the client information collected by the WWW server 37 is transmitted to the marketing server 35, the client information transmitted from the consumer is classified by merchandise bought by the consumer, by merchandise categories, or by selling agents, and the client information database 25 can be generated.

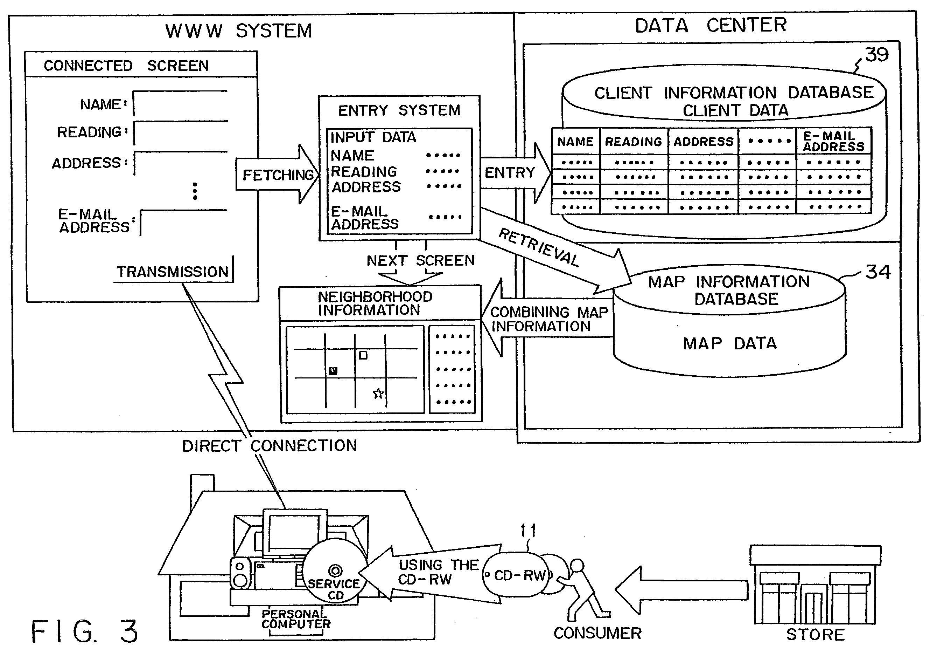

FIG. 3 shows the processes of fetching and entering client information in the server of the client information database generating company, and providing map information for the client when the site of a selling agent of merchandise is accessed using the CD-RW 11.

When a consumer accesses the home page of a specific selling agent using the CD-RW 11 provided by a store, it is connected to the WWW server 37 of the data center of the client information database generating company. Then, the name, reading, address, electronic mail address, etc. recorded on the CD-RW 11 are read by the personal computer of the client, transmitted from the WWW server 37, and displayed on the connection (input) screen. At this time, the further detailed client information such as the hobby, merchandise to be bought in the future, family configuration, etc. can be arbitrarily input. The data such as the name, address, etc. can be input by the consumer through the keyboard.

When the consumer operates the transmission button with the client information displayed, the client information being displayed is transmitted to the WWW server 37, and the client data is entered by the marketing server 35 in a client information database 39 in the marketing information database 36. The client information database 39 is formed by, for example, the name, reading, address, e-mail address, etc. as shown in FIG. 3.

Furthermore, the map data of a corresponding area is read from the map information database 34 based on the address of an entered client, and the area information containing the municipal office, hospital, post office, convenience store, etc. in the vicinity of the client is displayed.

Therefore, the client whose client information has been entered has the merit that even after the transfer to a new address, the information about the facilities, stores, etc. necessary for daily life can be obtained by accessing the home page. In addition, various convenient information can be provided for the client by linking the client information to the map data. When the information about the hobby and the merchandise to be bought in the future is grasped, the facilities related to the hobby, for example, the contents of the exhibition of a museum, and its address are displayed. Otherwise, the necessary information for a person such as the location of a store where they sell the merchandise to be bought by the person can be provided.

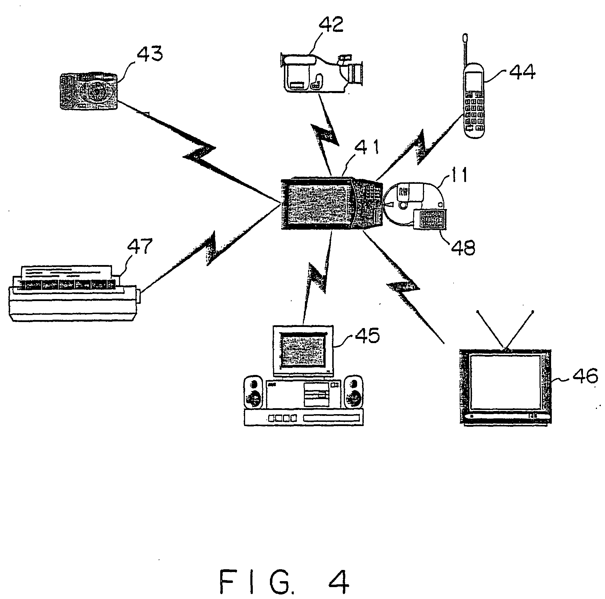

FIG. 4 shows the use of a portable media drive 41 for reading from and writing to the CD-RW 11.

The CD-RW 11 provided free of charge when a client buys merchandise is inserted into the media drive 41 to store various data. For example, the picture captured by a video camera 42, and a digital image captured by a digital camera 43 can be transmitted through wire or wireless to store them in the CD-RW 11. Furthermore, the site in Internet is accessed using a portable telephone 44 to download data, and the data is stored in the CD-RW 11. In addition, it can be used as an external storage device to a personal computer 45. Furthermore, the animation and the images stored in the media drive 41 or the data downloaded from Internet can be output and displayed on a television 46, or can be output and printed on a printer 47. Furthermore, the media drive 41 can access not only the CD-RW 11, but also a storage medium using semiconductor memory, a portable storage medium such as a CD-ROM, CD-R, DVD, etc., and the function can be extended by inserting an extension card 48.

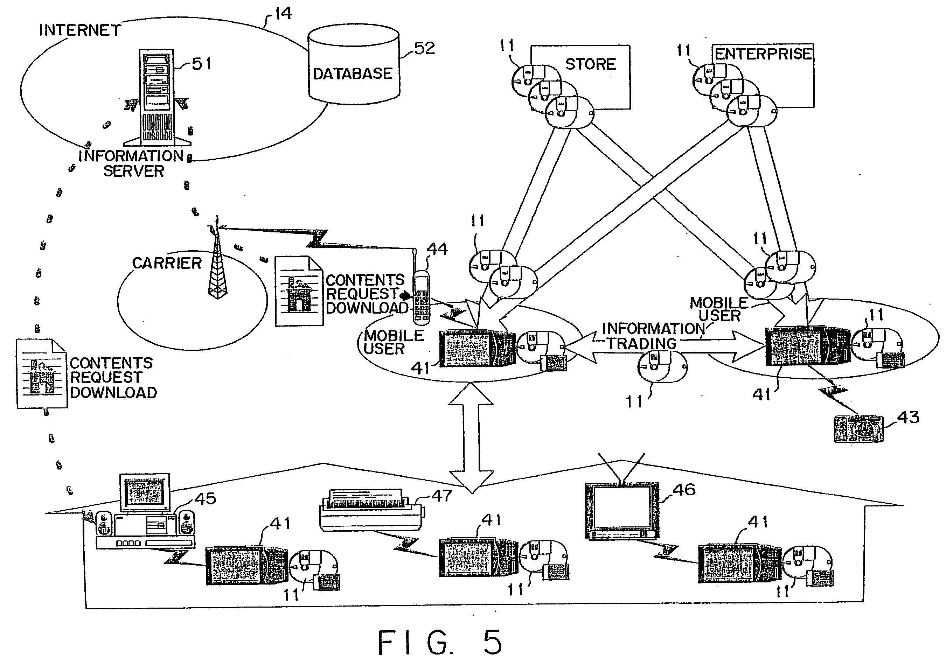

FIG. 5 shows the process of recording and transmitting information using the media drive 41.

Domestically, the contents such as music, images, map information, event information, time table, etc. are downloaded by the personal computer 45 from an information server 51 through Internet 14. The contents can be recorded by the media drive 41 on the CD-RW 11. The downloaded contents are stored in a database 52 as a use result.

Furthermore, the contents are downloaded from the information server 51 of the information distributor using the portable telephone 44, and the information is stored in the CD-RW 11, etc. by the media drive 41. Then, the CD-RW 11 storing the information is inserted into another media drive 41 to use the information.

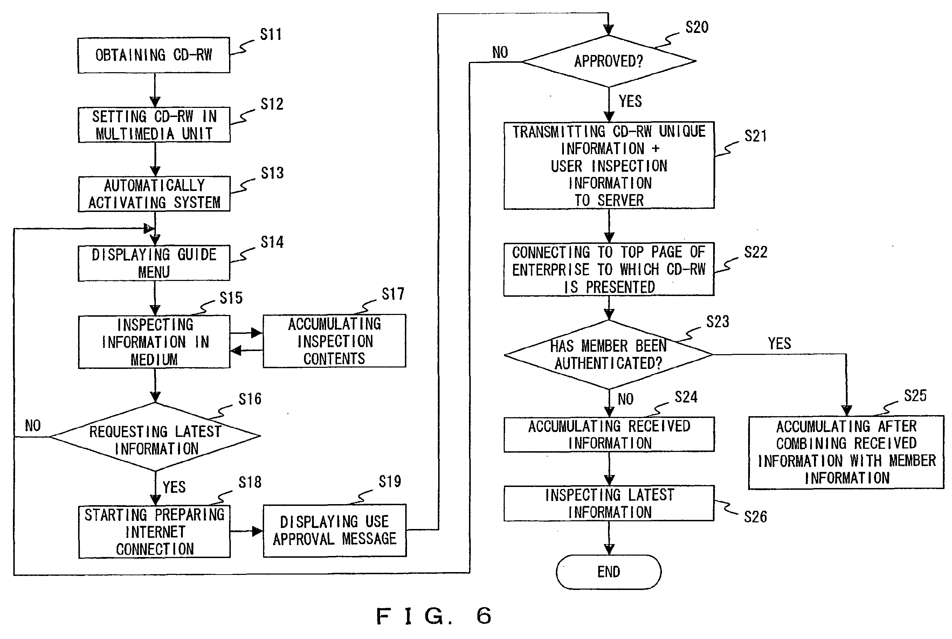

FIG. 6 is a flowchart of the operation of the user and the process of the server when a client accesses the Web site of the seller (including a manufacturer) using the CD-RW.

The user obtains the CD-RW at a store (S11 in FIG. 6), and sets the CD-RW in the CD-ROM drive, etc. of the multimedia unit (personal computer, etc.) at home (S12).

When the CD-RW is set, the automatic system of the personal computer is activated (S13), the program recorded in the CD-RW is read, and the guide menu is displayed (S14).

The information stored in the medium is selected from the guide menu, and the information is inspected (S15). The information to be stored in the inspected information is stored in the hard disk (S17).

When the latest information is to be obtained (YES in S16), the connection to Internet is selected from the guide menu. Then, the connecting process is automatically started, and the Web site of the seller of the bought merchandise is accessed (S18). When the Web site of the seller is accessed, a message of the use conditions and a confirmation message as to whether or not the use condition is acceptable are displayed (S19).

The server at the Web site determines whether or not the user has operated the acceptance button (S20).

When the acceptance button is operated (s20,yes),the personal computer of the user transmits the unique information stored in the CD-RW, for example, the information about the bought merchandise, the name of the seller, the name of the manufacturer, etc. and the personal information declared by the user when the merchandise is bought and stored in the CD-RW to the server which generates a client database (S21). Furthermore, they are connected to the top page of the enterprise for which the CD-RW is to be provided (S22).

Whether or not the member has been authenticated, that is, the current user is the entered user who input the ID, the password, etc. for user authentication (S23).

If the member has not been authenticated, the information received from the user (bought product, information about the store, etc.) is stored in the storage unit of the server (S24).

When the member is authenticated, the entered member information and the received information (bought product, information about the store, etc.) are combined with the member information, and stored in the storage unit (S25). After steps S24 and S25, the latest information provided at the site can be inspected by the user (S26).

According to the above mentioned embodiment, the client information such as the address, the name, etc. of the client who bought merchandise is recorded in the CD-RW 11 attached to the merchandise, and the CD-RW 11 is provided for the client free of charge. When the client accesses a specific site using the CD-RW 11, the client information is automatically transmitted to the server of the client information database generating company, and a client information database containing the client information associated with the information about the merchandise bought by the client is generated. Thus, the client information database generating company can provide a service of supplying the client information database classified by merchandise categories, by selling agents, etc. to the third party with charge.

Thus, by recording the client information associated with the information about the merchandise bought by the client, the clients can be classified by prospective merchandise categories. For example, a client who bought a toy is a prospective consumer for other items for children, and the company selling the related merchandise can regard the consumer as a most effective target of their direct mail.

Therefore, the client information and the information about the merchandise bought by the client are collected, and the client information database is generated by merchandise, merchandise categories, selling agents, etc., thereby realizing a largely effective sales strategy. Furthermore, by providing the client information database for a seller, a manufacturer, etc., the seller, the manufacturer, etc. can gain a large profit from their sales results.

When the CD-RW 11 is provided for the client, the client information is written in the CD-RW 11. Using the CD-RW 11, the client information can be automatically collected when the site of Internet is accessed, and it is not necessary for the client to input the address, the name, etc. of the client. Therefore, the client information can be collected from a client who is not willing to use a keyboard, thereby enhancing the collection rate of the client information.

Furthermore, the above mentioned client information is linked to the map data to generate marketing map information in which data are classified by merchandise, merchandise categories, or selling agents. As a result, the user can easily grasp how many consumers have bought specific merchandise in a given area, how the consumers are distributed in the area, or how many consumers have bought both selling agents A and B. Thus, services and merchandise can be provided corresponding to the needs of the consumers and the area.

Described below is the second embodiment of the present invention. The embodiment relates to a client information collection and point assigning system in which an advertisement is carried on the merchandise display tag, and a tag code uniquely assigned to merchandise is used.

When a tag code management company issues a tag code uniquely identifying merchandise (or the production lot of merchandise, or the production number unit) to a manufacturer, a seller, etc. at a Web site through Internet, and when a consumer accesses the Web site using the tag code, a service of collecting the client information and providing it for a manufacturer, etc., or a service of assigning a discount point (including a coupon, etc.) provided by a manufacturer, etc. to a consumer who input data into the tag code, etc.

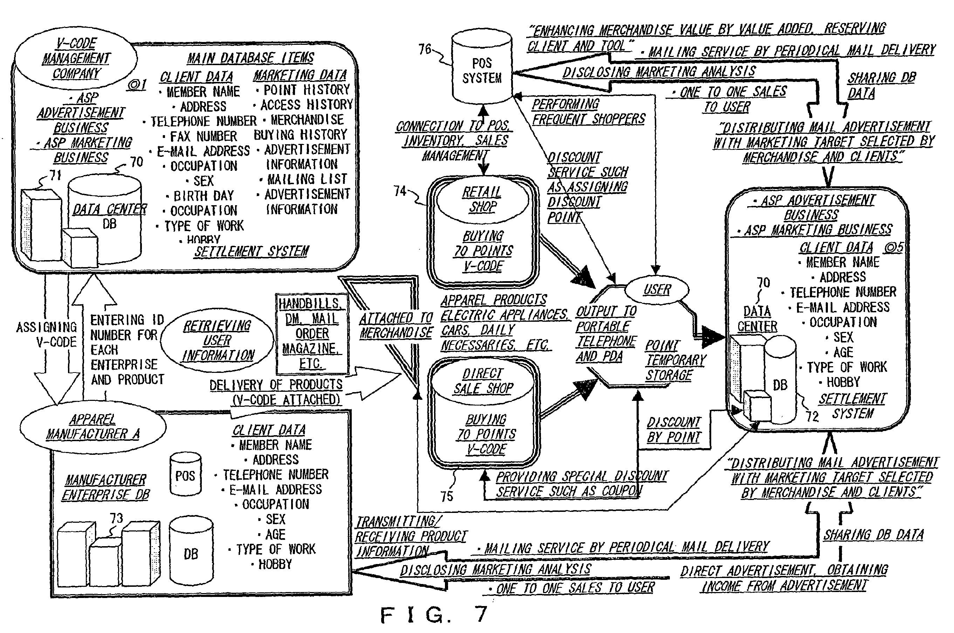

FIG. 7 shows the process of issuing a tag code, acquiring a point using the tag code by a user who bought merchandise, and collecting personal information about consumers, generating marketing information, and providing the marketing information by a tag code managing company for a manufacturer. The processes are performed among a server 71 of a tag code issuing company, a server 73 of a manufacturer, and a portable terminal device such as a portable telephone, etc. of a user.

The manufacturer accesses a Web site of the server 71 of a tag code management company, and inputs an enterprise code entered in advance, and an ID number for each product managed by the company itself.

The server 71 of a data center 70 of the tag code management company assigns to a manufacturer a tag code (V-CODE) corresponding to the merchandise requested by the manufacturer. A tag code management company issues a tag code (V-CODE), and performs an ASP marketing operation by providing marketing information about a consumer for a manufacturer, etc.

A manufacturer obtains an ID code, records a tag code on a tag (a paper medium such as a price tag, etc., an electronic storage medium, etc.) attached to merchandise, a label applied to the body of merchandise, or a case of the merchandise, and delivers the merchandise.

When a user buys merchandise at a retail store 74 or a direct sales store 75, he or she takes off the seal applied to the tag, etc. of the merchandise, and obtains the URL of the Web site of the tag code management company and the tag code printed under the seal. Then, the user accesses the Web site of the tag code management company using a portable terminal device such as a PDA, etc.

When the user first accesses the Web site of the tag code management company, he or she inputs personal information in the user entry form, and input an ID and a password. Then, by inputting the tag code, the user can acquire the point assigned to the bought merchandise. If the user has already made a user entry, then the user inputs an ID and a password, and then a tag code so that a discount point assigned to the bought merchandise can be further added to the already obtained point.

The server 71 of the tag code management company provides a system of using the point obtained by a consumer at the Web site commonly in an enterprise or a store which are members of a group providing a point assigning service using a tag code. That is, a system in which a consumer can buy merchandise at a discount by the value of the point acquired by the consumer in a store or a shop through Internet which are members of a group providing a point assigning service using a tag code is provided. In this system, since the consumer can have a considerable merit, the number of user entries can increase.

The server 71 of a tag code management company obtains the age, address, name, hobby, product to be obtained, electronic mail address, etc. of the consumer who actually bought merchandise from the personal information (client information) of the consumer entered as a user, and the tag code, and generates a client database 72. Then, based on the data of the client database 72, various marketing information is generated, and provided for a manufacturer, a store, etc. The server 71 of the data center 70 provides the marketing information as a service of an ASP (application service provider). The server 73 of a manufacturer or a POS system 76 can easily obtains the marketing information from the server 71.

Furthermore, the server 71 of the data center 70 can distribute to a corresponding client entered in the client database 72 the advertisement mail for selected marketing targets in a merchandise unit or a client unit at a request of a manufacturer or a store which are members of a group providing the above mentioned services.

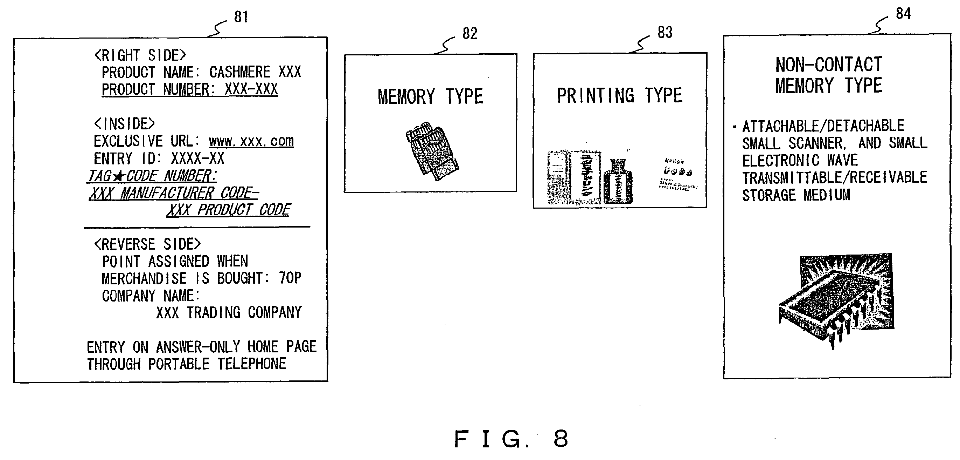

FIG. 8 shows various media on which a tag code is recorded. A medium on which a tag code is recorded can be a paper medium (including a plastic medium, etc.) 81 such as a price tag, etc. attached to merchandise, a storage medium (SD card, compact flash, CD-ROM/RW, DVD, etc.) 82 attachable to and detachable from a portable telephone, a print type 83 for printing on the body of merchandise, a non-contact type storage medium 84 for transmission/reception of data without contact, etc. The non-contact type storage medium 84 can be an RFID element, etc. capable of transmitting/receiving a radio signal, and storing data such as a tag code, etc.

The paper medium 81 such as a tag, etc. attached to merchandise has a structure in which a seal covers a tag code to prevent a person who has not bought the merchandise from using the tag code, and a person who has bought the merchandise can read the tag code by taking off the seal. The tag of the paper medium 81 shown in FIG. 8 is, for example, folded with the product name, the product number, etc. printed on the surface, with the URL of the site through Internet and the tag code for access to obtain a point printed inside, and with the point, etc. obtained when the product is bought printed on the reverse side. The folded tag is put in a transparent case which is broken when the merchandise is bought so that the inside tag code, etc. can be inspected.

The print type 83 for printing on the body of merchandise covers a tag code with a packing material or a label to prevent the tag code from being checked by others. The storage medium 82 of a memory type can be connected to a portable telephone by obtaining the storage medium 82 after breaking the packing material, etc. when the merchandise is bought. A portable telephone contains a connection unit for connection to the storage medium 82 such as a memory card, etc., and the storage medium 82 is inserted into a memory insertion slot in the portable telephone for connection to the connection unit, thereby reading the tag code stored in the storage medium 82.

The non-contact type storage medium 84 is designed to read a tag code when merchandise is sold, and a portable telephone is designed to have the function of receiving a radio signal, thereby transmitting the tag code from the non-contact type storage medium 84 to the portable telephone.

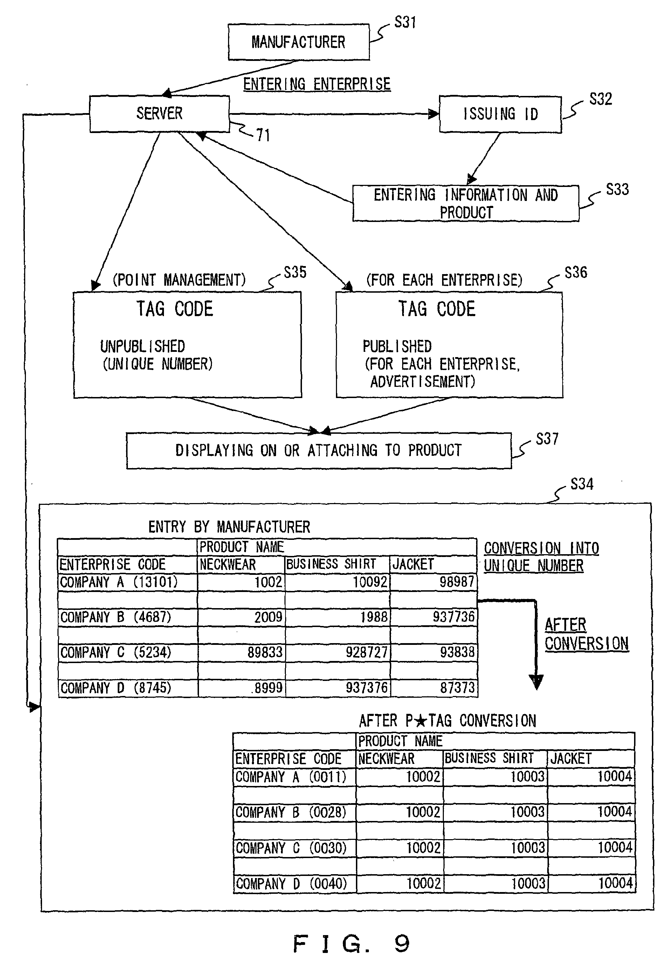

FIG. 9 is a flowchart of the procedure of obtaining a tag code by accessing the Web site of the company which manages the issue of the tag code.

When a manufacturer requests to issue a tag code, it first accesses the server 71 of a tag code management company to gain entry (S31 in FIG. 9). If an enterprise can successfully gain entry, an enterprise code is issued from the server 71 of the tag code management company to the entered enterprise (S32).

The entered enterprise enters in the server 71 of the tag code management company the access destination of a process, an advertisement medium, or information to be provided to which a tag code is to be assigned (S33). When a manufacturer enters in the server 71 a product to which a tag code is to be assigned, the server 71 issues a tag code unique to the product. In step S34, a tag code is issued. For example, if a company A having an enterprise code '13101' enters a product 'neckwear' having a merchandise code '1002', then an enterprise code '0011' + a product code '10002' is assigned as a tag code. The tag code is unique to each merchandise item (or a merchandise lot).

The server 71 of the tag code management company assigns to a manufacturer a converted and unpublished tag code (a tag code for a merchandise discount point) (S34). Furthermore, a published tag code (in enterprise, merchandise, or area unit) used for an advertisement medium, etc. is assigned to a manufacturer and a group (S36).

A manufacturer records an obtained and unpublished tag code on the tag, etc. of a product, or displays a published tag code on an advertisement medium.

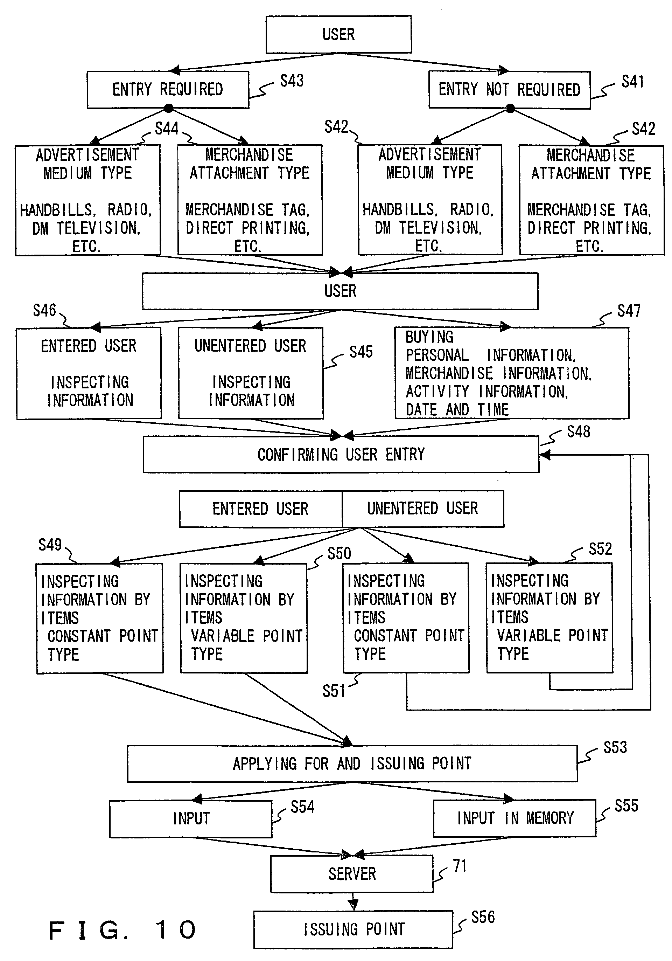

FIG. 10 is a flowchart of the process of issuing a point to a user using a tag code recorded on a tag attached to merchandise, or a published tag code displayed on an advertisement medium.

If a user has obtained a tag code by buying merchandise, or has obtained a published tag code displayed on a advertisement medium, then the user accesses the home page of a tag code management company through Internet from a portable terminal device such as a portable telephone, a PDA, etc.

When the home page of the tag code management company is accessed, the server 71 confirms, for example, whether or not a user entry is required.

An entered user is requested to input his or her ID and password (S41 in FIG. 10). Upon receipt of authentication from the server 71 after entering the ID and the password, the user inputs a tag code attached to merchandise or a published tag code of advertisement medium type (S42).

For a user who requires entry (unentered user), an input form of personal information is displayed (S43). The user input personal information and sets an ID and a password, and then input a tag code attached to merchandise or a published tag code of advertisement medium type.

An unentered user whose personal information has not been entered is allowed to inspect limited information (S45), and an entered user is allowed to inspect the merchandise information, the discount information, etc. which are published only to entered users (S46). Furthermore, the personal information, the bought merchandise, the store at which the merchandise was bought, etc. input by the person who gained user entry are stored in the client database 72 (S47).

Then, the server 71 identifies whether or not the user who accessed the Web site is an entered user (S48).

If he or she is an entered user, the server 71 determines whether the input tag code is a constant point type for assigning a constant point by merchandise or by information inspection items, or a variable point type for assigning a variable point depending on various conditions.

When the tag code is a constant point type, a constant point set by a manufacturer for bought merchandise or an advertisement medium is displayed (S49). When a tag code input by a user is a variable point type depending on the merchandise buying history, the access history, etc. of the user, the point corresponding to the conditions of the user is displayed (S50). According to the present embodiment, in any case either constant point type or variable point type, the point assigned to an entered user is set higher than the point assigned to an unentered user to promote the user entry. In the case of an unentered user, a constant point set for bought merchandise or an advertisement medium, or a variable point is displayed (351, and S52). For an unentered user, it is confirmed whether or not he or she is to be entered, and an input form of personal information is displayed to promote user entry.

If the user confirms the point displayed at the Web site of the tag code management company, and requests to acquire a point (S53), the tag code input from a portable telephone or a portable terminal device, or the tag code stores in the electronic storage medium, etc. connected to a portable telephone or a portable terminal device is transmitted to from the portable terminal device to the server 71 (S54, S55).

The server 71 issues a point corresponding to an entered user and an unentered user, and accumulates the issued point in the point of the corresponding client in the client database 72, and stores the result therein (S56).

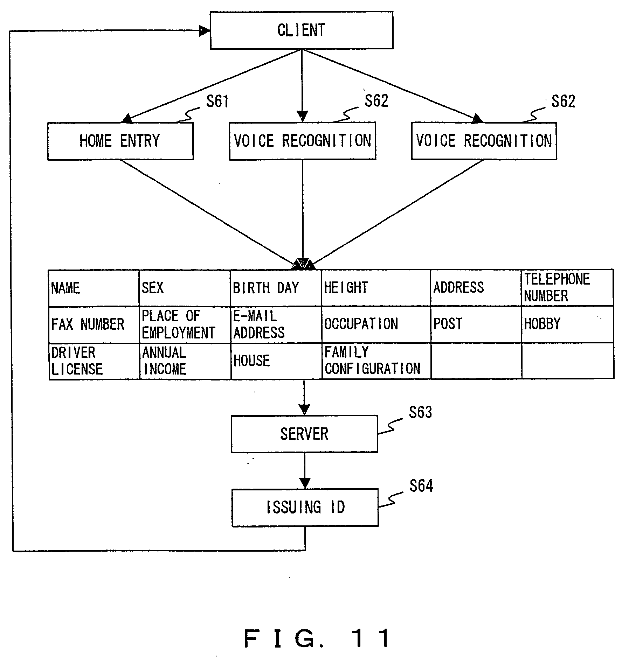

FIG. 11 is a flowchart of the process of entering a user in the server 71. When a user accesses the Web site of a tag code management company from a portable telephone or a portable terminal device, the input form of personal information is displayed. Therefore, the user inputs personal information (address, name, sex, height, birth day, occupation, phone number, place of employment, FAX number, mail address, hobby, annual income, house, family, questionnaire, etc.) from the input unit of a portable telephone or a portable terminal device (S61). Otherwise, based on the input form displayed when the Web site of the tag code management company is accessed, the personal information is input by voice from a portable telephone, and the server 71 recognizes the voice (S62).

The input personal information is stored in the client database 72 by the server 71 (S63), and an ID is issued to the user who has input the personal information (S64). If the user has obtained the ID, he or she sets a password, thereby terminating the user entry.

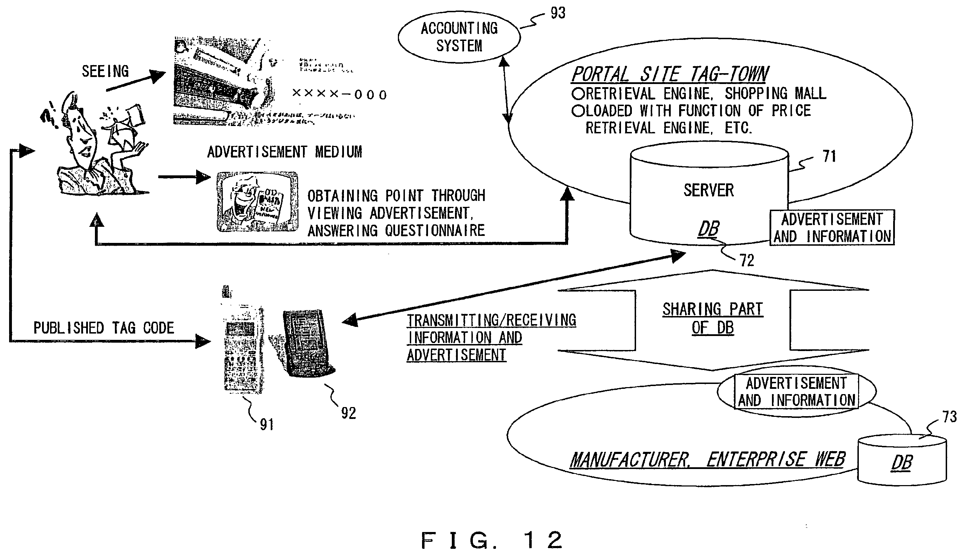

FIG. 12 shows the process of obtaining information using a published tag code displayed on an advertisement medium and the process of obtaining a point.

The manufacturer prints the URL of the home page of the tag code management company and the published tag code together with an advertisement on an advertisement medium such as a tag attached to the merchandise, the package of the merchandise, a newspaper, a magazine, a hanging ad in a train, etc. When a user sees the advertisement and is interested in the merchandise, the user accesses the home page through Internet from a portable telephone 91 or a portable terminal device 92 such as a PDA, etc., and inputs a tag code, thereby accessing the Web site providing the information the user has requested to acquire.

Instead of assigning a point to a user who accessed the Web site, the server 71 of the tag code management company requests the user to input personal information, collects consumer information such as what type of user takes interest in the merchandise, etc., and stores the information in the client database 72. Furthermore, a part of the consumer information collected by the server 71 of the tag code management company is provided for a manufacturer who provides an advertisement and information for sharing databases with the manufacturer.

Furthermore, the server 71 has the function of a retrieval engine, a shopping moll, a price retrieval engine, etc., and is linked to an accounting system 93.

By printing the advertisement information about the merchandise or other merchandise, the URL of the access destination, and a tag code on a tag attached to the merchandise, the package of the merchandise, and an advertisement medium, the user who has picked up the merchandise at a store accesses the Web site using the portable telephone 91 and the portable terminal device 92, inputs a tag code, and therefore easily inputs the detailed information that cannot be obtained at the store. In this case, since the user can directly move to the site at which necessary information can be obtained by accessing the home page of the tag code management company and inputting the tag code, it is not necessary to access the home page of the manufacturer as in the conventional technology, and search the site carrying the information about the corresponding merchandise, thereby quickly accessing necessary information.

Furthermore, since a number of users see merchandise information to acquire a discount point which is assigned to a user who inputs a published tag code, the effect of an advertisement can be improved. Furthermore, since a tag code management company can grasp which tag code has been used by the user for access, it can be determined which advertisement medium has received a larger number of times of access, and which area has tried access more frequently, and the effect of the advertisement on a advertisement medium can be correctly evaluated. Therefore, an advertiser can be provided with the information about the evaluation of an advertisement effect of an advertisement medium. Furthermore, according to the frequency of access using an access code assigned to an advertisement medium in area unit, the marketing information can be collected for each area as to in which area and the advertisement or information about which merchandise users are more interested.

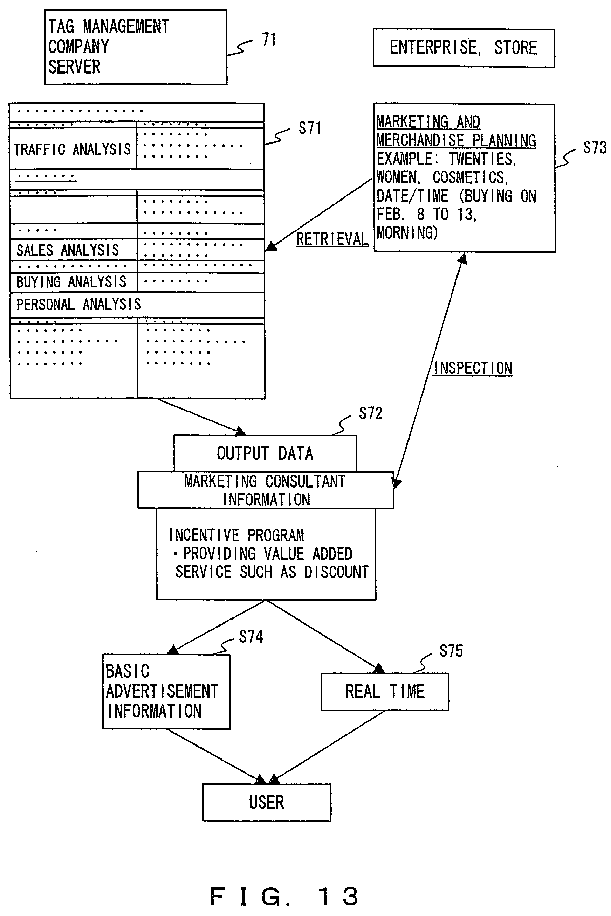

FIG. 13 is a flowchart of the process of generating marketing information from client information collected by the server 71 of the tag code management company, and providing the information for a manufacturer and a store, and the process of distributing merchandise information in real time to consumers.

The server 71 generates marketing information in merchandise, manufacturer, and area units according to the information about the age, sex, hobby, bought merchandise, buying frequency, store at which merchandise has been bought, accessed information, access rate of an advertisement medium, etc. (S71 shown in FIG. 13). The marketing information can be generated by analyzing access traffic and sales, analyzing buying concept such as a buying motif, an effect of an advertisement, analyzing personality, etc. using a tag code.

The marketing information and the consulting information generated based on the marketing information are provided as an ASP by the server 71 of a tag code management company for each manufacturer and a retail store (S72).

The manufacturer and the retail store accesses the Web site of the server 71 to retrieve marketing information about which merchandise was bought by, for example, women in twenties from Feb. 8 to 13, or to inspect the marketing information and the consulting information provided by the server 71 (S73).

Furthermore, to a user requesting the distribution of mail in the users entered based on a value added service such as a discount point, etc., the more detailed information and advertisement information about the merchandise are distributed by electronic mail (S74).

Additionally, to a user who accesses the Web site of the tag code management company from a portable telephone, etc. when he or she buys merchandise, and inputs a tag code attached to the merchandise, the information about merchandise relating to the merchandise the user bought is provided by electronic mail in real time (S75). For example, since the server 71 can recognize using a tag code which merchandise the user has bought, the information about merchandise relating to the merchandise the user has bought, or the information that a discount is allowed by simultaneously buying another merchandise, etc. can be distributed by electronic mail to the user who bought merchandise. Thus, the user is promoted to buy another merchandise, and has the merit that he or she can further buy other merchandise at a discount because the user can receive the information about the discount when he or she buys merchandise.

Furthermore, according to the buying history of a client in the client database 72, it is known how many times a client has bought merchandise of a specific manufacturer. Therefore, the manufacturer can provide a service of allowing a higher discount rate for the client than for clients who buy the merchandise of the manufacturer less frequently.

For example, assume that a user O buys a fleece of an apparel company A, accesses the Web site of a tag code management company using a portable telephone, and inputs the tag code attached to the merchandise. If the user O is a welcome client who frequently buys the merchandise of the company A, a discount rate higher than a normal discount rate is displayed. Therefore, the user O can buy the merchandise at the high discount rate. Since the discount rate is transmitted from the server 71 to the POS terminal of a store through Internet, the user O and the store can buy and sell the fleece at a priority price without detection by a third party.

Furthermore, there can be the function of allowing a welcome client who frequently buys merchandise to negotiate the discount rate presented to the welcome client at Web site. For example, if the lowest possible sales price depending on the buying history of a client is set by a manufacturer in the server 71, and the client starts negotiating the discount price, the server 71 can have the function of discount the merchandise depending on the negotiation with the client based on the lowest possible price set in the server 71.

Using the above mentioned service, the client is promoted to repeatedly buy the merchandise of the same manufacturer, thereby effectively improving the sales of the manufacturer.

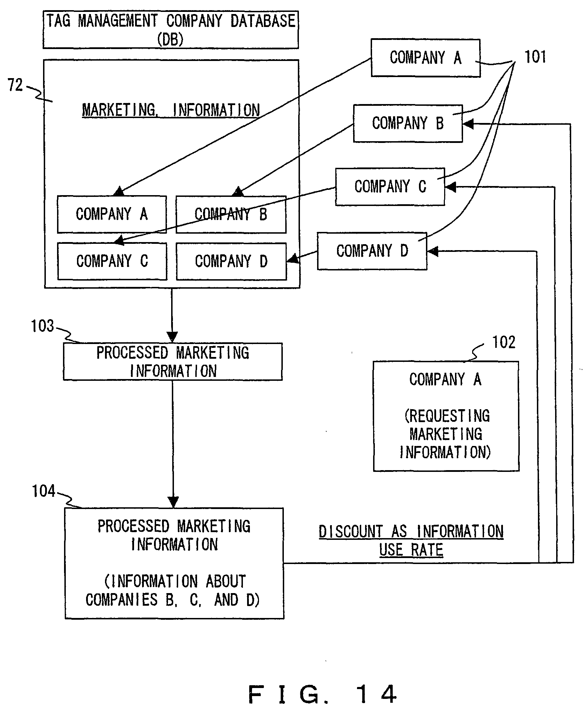

FIG. 14 shows the process of the client information and the marketing information collected by a plurality of manufacturers or stores issuing a tag code and provided for each company.

The server 71 of the tag code management company obtains the client information and the marketing information collected by each of the companies A, B, C, and D 101, and generates a marketing information database in the client database 72. When the server 71 receives a request to generate marketing information from the company A (101), it processes the information obtained from the companies A, B, C, and D, and generates the processed marketing information corresponding to the request from the company A (103). Since the information from the companies B, C, and D is used, the information use rate is paid to these companies (104).

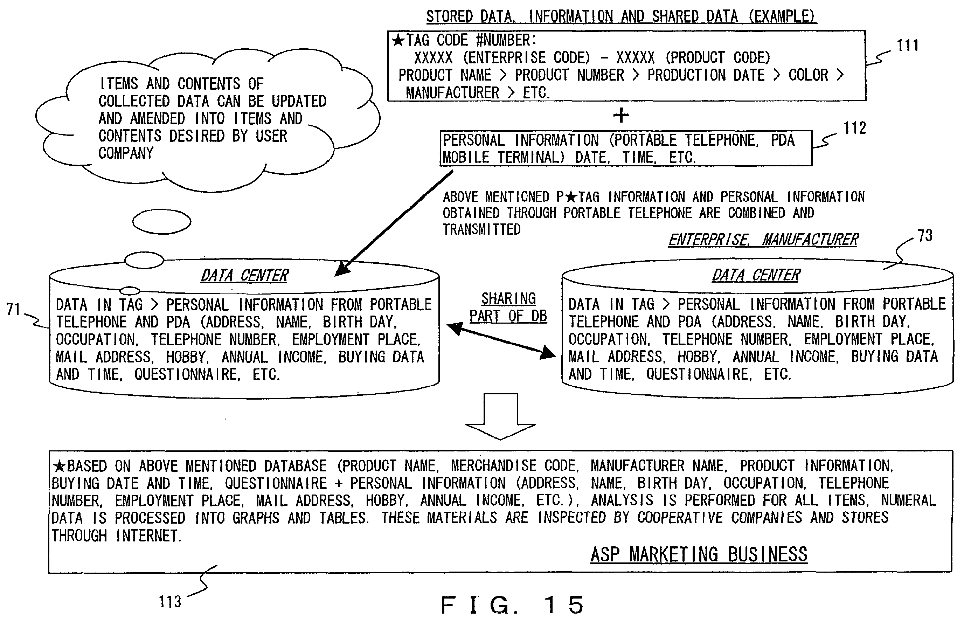

FIG. 15 shows the process of sharing a part of the client information collected by the server 71 of the data center 70 of a tag code management company with the server 73 of the data center.

The server 71 of the tag code management company collects the personal information about the user who gained access using a tag code, associates information 111 contained in the tag code with the personal information about the user and information 112 about the access date, etc., and stores the obtained information in the client database 72. The information specified by a tag code can be, for example, the name of a manufacturer, the name of a product, the product number, the production date, etc.

Then, based on the personal information (address, name, birth day, occupation, hobby, etc.) and the information (the category of merchandise, the name of a product, the name of a manufacturer, etc.) about the merchandise in the client database 72, the obtained information is analyzed and processed to generate a graph and a table for use in marketing (113). The information can be inspected through Internet by a cooperative enterprise or store.

When the personal information admitted by an entered user of the client database 72 is provided for a manufacturer, etc., a part of the reward obtained by providing the personal information is counted as a discount point for the user. With the above mentioned system, an entered user has a merit, and therefore promoting the entry of client information.

Since a store, a manufacturer, etc. can immediately obtain the marketing information about a consumer (address, occupation, hobby, annual income, questionnaire, merchandise to be bought in the future, etc.), the merchandise bought by the consumer, and the manufacturer of the merchandise by inspecting the marketing consumer information, the merchandise and the service satisfying the request of the consumer can be provided. Additionally, the distribution cost can be reduced by omitting a wholesaler.

As described above starting with the advertisement of a merchandise display tag, a tag can be used to improve the value of the product and the information contained therein, and can function as an advertisement medium and an effective marketing tool.

In the above mentioned first embodiment, the CD-RW 11 is attached to merchandise as a tag, but it is not always necessary to attach it to merchandise as a tag. That is, it can be provided for a client when merchandise is sold, or can be provided free of charge as an advertisement for a consumer interested in specific merchandise.

In addition, a writable and portable storage medium is not limited to the CD-RW 11, but can be a memory card using semiconductor memory, CD-R, DVD, MO, a magnetic storage medium, etc.

Furthermore, merchandise is not limited to goods, but can be a service to be provided, foods to be served in an eating house, a restaurant, etc. When the services are provided, the CD-RW 11, etc. can be given to clients. For example, in an eating house, when a consumer accesses a specific site (server) such as a home page, etc. of the house using the provided CD-RW 11, client information can be collected, and marketing map information can be generated by linking the client information to the map information, thereby obtaining the information about the prospective type of clients in an area, about how many clients are expected, etc.

Additionally, by a client information database generation company providing the marketing information together with the already obtained data about the age configuration, family configuration, hobby, etc. in a specific area, an effective marketing tool for determination of the target group of clients in a specific area in which a store is managed can be obtained.

Furthermore, according to the according to embodiment, the client information database generation company collects the client information for a selling agent, etc., but a selling agent, a manufacturer, etc. can collect client information directly or through Internet. In this case, the client information database generation company has a selling agent, etc. provide client information, links the client information to map data, generates marketing map information, and provides it for the selling agent, etc.

According to the second embodiment, the server 71 which collects client information simultaneously provides marketing information as an ASP, but all services are not necessarily provided by one server. That is, a plurality of servers can share services respectively.

According to preferred aspects of the present invention, client information and information about the merchandise bought by a client, a store where the client bought the merchandise, a selling agent, etc. can be collected when the client accesses the site of the network using a provided portable storage medium. Thus, the client information classified by bought merchandise, by selling agents, etc. can be obtained, and a sales strategy can be set with target clients roughly selected. Furthermore, by generating marketing map information obtained by linking the client information to the map data based on the address of a client, the number of clients who bought specified merchandise in a specified area, the number of prospective clients for the specified and related merchandise, and the addresses of prospective clients for a specified store, eating house, etc. can be detected. Therefore, according to the obtained information, an appropriate sales strategy can be established. Furthermore, since the merchandise and its manufacturer can be detected by a tag code, the information such as the type of a client for specified merchandise, the merchandise and its manufacturer requested by a specified client, etc. can be obtained. Additionally, since a point can be acquired by accessing the site using a tag code obtained when a user buys merchandise, or a tag code recorded on an advertisement medium, the user can save the point to buy any merchandise at a discount. In addition, marketing information can be generated according to collected client information, and can be provided for a manufacturer, etc. Furthermore, a site at which user-desired information can be provided can be efficiently accessed by accessing the site using a tag code displayed or recorded on an advertisement medium.

## Claims

1. A client information collecting method using a network, comprising:
attaching a writable and portable storage medium (11) to merchandise; and
recording client information including an address and a name of a client, and information about merchandise, a manufacturer or a selling agent on the portable storage (11) medium, wherein
when the client accesses a site in a network (14) using the portable storage medium (11), the client information and the information about the merchandise, the manufacturer or the selling agent recorded on the portable storage medium (11) can be collected.

2. A client information collecting method using a network, comprising
storing client information including an address and a name of a client on a writable and portable storage medium (11), and providing the portable storage medium (11) for the client, wherein
when the client accesses a site in a network (14) using the portable storage medium (11), the client information, or the client information and information about merchandise the client bought recorded on the portable storage medium (11) can be collected.

3. The method according to claim 1, wherein
when the client accesses the site of the network (14) using the portable storage medium (11), the client information and the information about the merchandise, the manufacturer or the selling agent recorded on the portable storage medium (11) can be collected, the client information is classified according to the collected information about the merchandise or the selling agent, and a client information database (25) is generated by merchandise categories or selling agents.

4. The method according to claim 1, wherein
when the client accesses the site of the network (14) using the portable storage medium, marketing map information is generated by linking the client information and map data stored in advance based on the collected address of the client.

5. The method according to claim 4, wherein
said marketing map information is generated by categories, manufacturers, or selling agents of the merchandise bought by the client.

6. The method according to claim 4, wherein
said marketing map information is obtained by classifying client based on an age or a family configuration included in the client information, and linking information about the classified client to the map data.

7. The method according to claim 1, wherein
a bar code recording said information about the merchandise is printed on a reverse side of the portable storage medium.

8. A client information providing method, comprising:
recording client information including an address and a name of a client and information about merchandise on a writable and portable storage medium (11) attached to the merchandise, and providing the portable storage medium (11) for the client;
collecting the client information and the information about the merchandise bought by the client recorded on the portable storage medium (11) when the client accesses a site in a network (14) using the portable storage medium (11);
generating a client information database (25) obtained by classifying the collected client information by merchandise categories, manufacturers, or selling agents; and
providing the generated client information database(25).

9. A client information providing method, comprising:
recording client information including an address and a name of a client on a writable and portable storage medium (11), and providing the portable storage medium (11) for the client;
collecting the client information and information about a merchandise, a manufacturer, or a selling agent recorded on the portable storage medium (11) when the client accesses a site in a network (14) using the portable storage medium (11);
generating a client information database (25) obtained by classifying the collected client information by merchandise categories, manufacturers, or selling agents; and
providing the generated client information database (25).

10. A client information collecting method, comprising:
attaching to merchandise a writable and portable storage medium (11) on which information available to a client is recorded;
inputting from an input device (12) client information including an address and a name of the client when the merchandise is sold, and recording the information in the portable storage medium (11);
generating a client information database (25) by classifying the input client information by merchandise categories, manufacturers, or selling agents; and
generating marketing map information by merchandise categories or selling agents by linking the client information to a map data stored in advance according to the address of the client in the client information database (25).

11. A merchandise information collection apparatus, comprising:
a client information collection unit (26) collecting the client information including an address and a name of a client and information about merchandise sold to the client or a selling agent recorded on a writable and portable storage medium (11) when the client accesses a site of a network using the portable storage medium (11); and
a client information database generation unit (24) generating a client information database (25) obtained by classifying the client information collected by said client information collection unit (26) by merchandise categories, manufacturers, or selling agents.

12. The apparatus according to claim 11, further comprising
a marketing map information generation unit (35) generating marketing map information by linking an address of the client in the client information database (25) with map data stored in advance.

13. A client information collecting method using a network, comprising:
recording a tag code uniquely determined for each on a tag attached to merchandise, a body of the merchandise, or a case storing the merchandise; and
collecting (71) a tag code of merchandise bought by a user and input from a portable terminal device and client information including a name and an address of the user when the user who bought the merchandise accesses a site of the network from the portable terminal device.

14. A client information collecting method, comprising:
issuing (71) a tag code uniquely determined for merchandise;
recording the tag code on a tag attached to the merchandise, a body of the merchandise, or a case storing the merchandise; and
collecting (71) a tag code of merchandise bought by a user and input from a portable terminal device and client information including a name and an address of the user when the user who bought the merchandise accesses a site of the network from the portable terminal device.

15. The method according to claim 13, wherein:
a manufacturer enters information about merchandise for which the manufacturer requests to issue a tag code, and obtains the tag code at a site provided by an issuer of the tag code; and
said obtained tag code is recorded on a tag attached to the merchandise, a body of the merchandise, or a case storing the merchandise, thereby putting the merchandise for sale.

16. The method according to claim 13, wherein
a client information database (72) is generated by merchandise and by manufacturers based on the collected client information and tag code.

17. A point assigning method using a network, comprising:
recording a tag code uniquely determined for each on a tag attached to merchandise, a body of the merchandise, or a case storing the merchandise; and
assigning (71) to a user who bought merchandise a point set in a tag code of the merchandise bought by the user input from a portable terminal device when the user accesses a site of the network (14) from the portable terminal device.

18. A point assigning method using a network, comprising:
recording or displaying on an advertisement medium a tag code uniquely determined for the advertisement medium; and
assigning (71) a user a point set in the tag code when the user accesses a site in the network using the tag code.

19. The method according to claim 17, wherein:
said site is accessed, client information including an input name and address and the tag code are collected, and a client database is generated; and
a discount rate or an acquired point for a client who buys merchandise of a same manufacturer more frequently is set higher based on the client database.

20. The method according to claim 17, wherein
points are managed such that points issued by a plurality of manufacturers can be commonly used; and
merchandise can be bought at a discount by downloading a point acquired by a client from the site to a portable terminal device or a terminal device of a store. .

21. A client information providing method, comprising:
recording a tag code uniquely determined for each on a tag attached to merchandise, a body of the merchandise, or a case storing the merchandise; and
generating (71) a client database (72) by collecting client information including a name and an address of a user input from a portable terminal device together with the tag code when the user who bought the merchandise accesses a site of the network from the portable terminal device;
generating (71) marketing information based on the client database; and
providing (71) the marketing information for a manufacturer or a store.

22. A merchandise information providing method using a network, comprising:
issuing (71)a tag code uniquely determined for an advertisement medium or information to be provided;
recording the tag code on the advertisement medium for advertisement; and
automatically accessing a site providing information about advertised merchandise when a user accesses the site of a network using the tag code.

23. The method according to claim 21, wherein
when a user accesses the site and inputs the tag code recorded on an advertisement medium, the frequency of access using the tag code is recorded to measure an effect of an advertisement on the advertisement medium.

24. The method according to claim 13, wherein
said portable terminal is a portable telephone .

25. A merchandise information collection apparatus, comprising:
a client information collection unit(26) collecting a tag code uniquely determined for merchandise, recorded on a tag attached to merchandise, a body of merchandise, or a case storing the merchandise, and client information including a name and an address which are input from a portable terminal device when a user who bought the merchandise accesses a site in a network from a portable terminal device; and
a database generation unit (71) generating client information database (72) including the client information, and a manufacturer and a name of merchandise specified by the tag code collected by said client information collection unit.

26. A merchandise information collection apparatus, comprising:
a client information collection unit (71) collecting a tag code uniquely determined for merchandise, recorded on a tag attached to merchandise, a body of merchandise, or a case storing the merchandise, and client information including a name and an address which are input from a portable terminal device and when a user who bought the merchandise accesses a site in a network from a portable terminal device; and
a point assignment unit (71) assigning a user who buys merchandise a point set in the tag code.

27. A point service providing apparatus, comprising:
a point assignment unit (71) issuing a tag code uniquely determined for an advertisement medium or provided information, recording or displaying the tag code on the advertisement medium for advertisement, and assigning to a user a point set in the tag code when the user accesses a site in a network and inputs the tag code recorded or displayed on the advertisement medium; and
an advertisement evaluation unit (71) measuring an effect of the advertisement of the advertisement medium from access frequency using the tag code.

28. A computer-readable storage medium storing a program for performing a process comprising:
recording client information including an address and a name of a client, and information about merchandise, a manufacturer or a selling agent on a writable and portable storage medium attached to the merchandise; and
collecting the client information and the information about the merchandise, the manufacturer or the selling agent recorded on the portable storage medium when the client accesses a site in a network using the portable storage medium.

29. The storage medium according to claim 28, wherein
marketing map information is generated by linking the client information to map data stored in advance based on the collected address of the client.

30. A computer-readable storage medium storing a client information collecting program for collecting a tag code uniquely determined for merchandise, recorded on a tag attached to merchandise, a body of the merchandise, or a case storing the merchandise, and client information including a name and an address which are input from a portable terminal device when a user who bought the merchandise accesses a site in a network from the portable terminal device,.

31. A computer-readable storage medium storing a program for assigning a user who bought merchandise a point set in a tag code when the user accesses a site in a network from a portable terminal device and inputs from the portable terminal device the tag code uniquely set for merchandise, and recorded on a tag attached to the merchandise, a body of the merchandise, or a case storing the merchandise.
